# EUROPÄISCHE PATENTANMELDUNG

(11) **EP 2 868 393 A1**
(43) Veröffentlichungstag der Anmeldung: **06.05.2015**
(21) Anmeldenummer: 13190744.6
(22) Anmeldetag: 29.10.2013
(51) Int. Cl.: B05C 17/005

(54) **Austragsstössel, Austragseinrichtung umfassend den Austragsstössel und Verfahren**

(71) Anmelder: Sulzer Mixpac AG, 9469 Haag (CH)
(72) Erfinder: Clemens, Victor, 6900 Bregenz (AT)
(74) Vertreter: Manitz, Finsterwald & Partner GbR

(57) **Zusammenfassung**

Die Erfindung betrifft einen Austragsstössel (1) für eine Austragseinrichtung (2). Die Austragseinrichtung (2) ist geeignet zur Aufnahme einer Kartusche (3) enthaltend ein austragbares Medium. Der Austragsstössel (1) ist an und/oder in der Austragseinrichtung (2) anordenbar ist, wobei der Austragsstössel (1) eine Stirnseite (4) aufweist, die auf die Kartusche (3) einwirken kann zum Austragen des Mediums aus der Kartusche (3). Der Austragsstössel (1) ist derart ausgestaltet, dass die Stirnseite (4) während des Austragens des Mediums zumindest einen ersten Austragsquerschnitt (5) und anschliessend zumindest einen zweiten Austragsquerschnitt aufweist. Insbesondere weisen der erste Austragsquerschnitt (5) und der zweite Austragsquerschnitt eine unterschiedliche Grösse und/oder Form auf.

## Beschreibung

Die Erfindung betrifft einen Austragsstössel, eine Austragseinrichtung umfassend den Austragsstössel sowie ein Verfahren zum Austragen eines Mediums aus einer Kartusche gemäss dem Oberbegriff der unabhängigen Ansprüche.

Im industriellen Bereich, im Bauwesen, beispielsweise beim Bau von Gebäuden, und auch im Dentalbereich werden häufig Kartuschen eingesetzt, um fliessfähige Substanzen zu lagern und bei Bedarf für die jeweilige Anwendung auszutragen. Beispiele für solche Substanzen sind Fugendichtmassen, Massen für chemische Dübel oder chemische Anker, Klebstoffe, Pasten oder Abformmassen im Dentalbereich. Üblicherweise sind diese Kartuschen aus Kunststoff gefertigt und werden in einem Spritzgiessverfahren hergestellt.

Man unterscheidet zwischen Ein-Komponentensystem, bei welchen das auszutragende Material nur aus einer Komponente besteht, und Zwei- oder Mehr-Komponentensystemen, bei denen mindestens zwei verschiedene Komponenten in separaten Kammern der gleichen Kartusche oder in separaten Kartuschen gelagert werden, wobei die Komponenten beim Austragen mittels einer dynamischen oder einer statischen Mischvorrichtung innig durchmischt werden. Ein Beispiel hierfür sind Zwei-Komponenten-Klebstoffe, die erst nach dem Durchmischen der beiden Komponenten aushärten.

Aus der WO 2011/131483 A1 ist eine stehfähige Kartusche bekannt mit mindestens einer sich in Längsrichtung erstreckenden Aufnahmekammer für ein auszutragendes Medium, mit einem Kartuschenboden und mit einer Kartuschenwand, welche die Aufnahmekammer begrenzen, wobei die Kartusche mittels einem Thermoformverfahren oder einem Blasformverfahren hergestellt ist und kontrolliert kollabierbar ausgestaltet ist.

Dieser vorbekannte Stand der Technik führt jedoch unter Umständen dazu, dass beim Kollabieren der Kartusche zum Austragen des Mediums ein Restvolumen in der Kartusche am Ende verbleibt, da der Austragsstössel der Austragseinrichtung die Kartuschenwand gegebenenfalls nicht weiter zusammendrücken kann unter anderem wegen einer Faltenbildung einer Kartuschenwand der Kartusche beim Kollabieren.

Es ist daher eine Aufgabe der vorliegenden Erfindung, die Nachteile des Bekannten zu vermeiden, insbesondere also einen Austragsstössel, eine Austragseinrichtung und ein Verfahren zum Austragen eines austragbaren Mediums aus einer Kartusche bereitzustellen, so dass das verbleibende Restvolumen in der Kartusche minimiert wird.

Diese Aufgaben werden durch den Austragsstössel, eine Austragseinrichtung umfassend den Austragsstössel sowie das entsprechende Verfahren gemäss den unabhängigen Ansprüchen gelöst.

Die abhängigen Ansprüche beziehen sich auf besonders vorteilhafte Ausführungsformen der Erfindung.

Die Erfindung betrifft einen Austragsstössel für eine Austragseinrichtung. Die Austragseinrichtung ist geeignet zur Aufnahme einer Kartusche enthaltend ein austragbares Medium, wobei die Kartusche insbesondere kollabierbar ist. Der Austragsstössel ist an und/oder in der Austragseinrichtung anordenbar ist, wobei der Austragsstössel eine Stirnseite aufweist, die auf die Kartusche einwirken kann zum Austragen des Mediums aus der Kartusche. Der Austragsstössel ist derart ausgestaltet, dass die Stirnseite während des Austragens des Mediums zumindest einen ersten Austragsquerschnitt und anschliessend zumindest einen zweiten Austragsquerschnitt aufweist. Insbesondere weisen der erste Austragsquerschnitt und der zweite Austragsquerschnitt eine unterschiedliche Grösse und/oder Form auf.

Die Änderung des Querschnitts des Austragsstössels während des Austragens des Mediums hat den Vorteil, dass in Abhängigkeit von der Ausgestaltung der Kartusche und/oder der Austragseinrichtung gewährleistet werden kann, dass das verbleibende Restvolumen in der Kartusche minimiert werden kann. Dies wird dadurch erreicht, dass der Querschnitt der Stirnseite verkleinert, vergrössert oder in der Form verändert wird; selbstverständlich kann bei einer Änderung der Form die Grösse des Querschnitts gleich bleiben oder aber mit einer Verkleinerung oder Vergrösserung des Querschnitts kombiniert werden.

Im Sinne der vorliegenden Anmeldung wird als Austragsquerschnitt des Austragsstössels der Querschnitt der Stirnseite verstanden, der bei bestimmungsgemässem Gebrauch zum Austragen des Mediums in Austragsrichtung bewegt wird und somit auf die Kartusche einwirken kann. Der Querschnitt wird dabei im Wesentlichen senkrecht zur Austragsrichtung bestimmt.

Beispielsweise kann eine derartige Querschnittsänderung durch eine Verwendung von zwei Austragsstösseln erfolgen, die nacheinander verwendbar sind und unterschiedliche Querschnitte aufweisen. Zudem ist es denkbar, einen modular aufgebauten Austragsstössel zu verwenden, der in Abhängigkeit von der Position des Austragsstössels an und/oder in der Austragseinrichtung einen unterschiedlichen Querschnitt aufweist; hierfür können die Module des Austragsstössels koppelbar und/oder entkoppelbar sein, wobei die Kopplung und/oder Entkopplung der Module mechanisch oder auch elektromagnetisch, bspw. mittels eines schaltbaren Elektromagneten, erfolgen kann, wobei die Kopplung und/oder Entkopplung gesteuert oder geregelt erfolgen kann; die Module des Austragsstössels können als koppelbare und/oder entkoppelbare Stössel ausgebildet sein. Der modular aufgebaute Austragsstössels kann selbstverständlich alternativ auch nicht gekoppelte Module, insbesondere Stössel, umfassen, wobei ein Antrieb zumindest zwei steuerbare und/oder regelbare Modulantriebe umfasst, die derart mit den Modulen wirkverbunden sind, so dass die Stirnseite des Austragsstössels während des Austragens des Mediums zumindest einen ersten Austragsquerschnitt und anschliessend zumindest einen zweiten Austragsquerschnitt aufweist.

Die insbesondere kollabierbare Kartusche kann ein Aufnahmevolumen für das Medium im Bereich von 10 ml bis 1000 ml, bevorzugt von 25 ml bis 600 ml und besonders bevorzugt von 50 ml bis 300 ml aufweisen.

Bevorzugt ist bei bestimmungsgemässer Bewegung des Austragsstössels entlang einer axialen Austragsrichtung der erste Austragsquerschnitt grösser als der zweite Austragsquerschnitt. Dies hat den Vorteil insbesondere bei der Verwendung von kollarbierbaren Kartuschen, dass die Kartuschenwand zwar seitlich in der Austragseinrichtung zusammengepresst wird, der Austragsstössel mit dem kleineren zweiten Austragsquerschnitt in einem zentralen Bereich jedoch weiter bewegt werden kann zum weitgehenden Austragen des Restvolumens.

Bevorzugt ist der Austragsstössel zumindest zweiteilig ausgebildet und umfasst einen ersten Stössel und einen zweiten Stössel. Besonders bevorzugt umfasst der Austragsstössel genau einen ersten Stössel und einen zweiten Stössel.

Bevorzugt ist am und/oder im Austragsstössel eine Koppeleinrichtung zum Koppeln und/oder Entkoppeln des ersten Stössels und des zweiten Stössels angeordnet ist. Insbesondere ist ein Koppeln und/oder Entkoppeln reversibel.

Die zumindest zweiteilige Ausgestaltung des Austragsstössels als erster Stössel und zweiter Stössel, die koppelbar und/oder entkoppelbar sind, hat den Vorteil, dass ein mechanisch einfacher und zuverlässiger Austragsstössel bereitstellbar ist, mit dem die Querschnittsänderung erzielt werden kann, der zudem einfach bedienbar ist.

Insbesondere umfasst der erste Austragsquerschnitt den Querschnitt der Stirnfläche des ersten Stössels und des zweiten Stössels. Weiter insbesondere umfasst der zweite Austragsquerschnitt den Querschnitt der Stirnfläche des zweiten Stössels und nicht des ersten Stössels.

Bevorzugt ist der zweite Stössel im ersten Stössel angeordnet. Insbesondere sind der erste Stössel und der zweite Stössel im Wesentlichen zentriert zueinander angeordnet.

Bevorzugt ist der erste Stössel zumindest in einem Abschnitt hohlzylinderförmig ausgebildet ist zur Aufnahme des zweiten Stössels.

Bevorzugt weist der erste Stössel zumindest eine erste Ausnehmung und der zweite Stössel zumindest eine zweite Ausnehmung auf. Die erste Ausnehmung ist insbesondere eine erste Öffnung. Die erste Ausnehmung und die zweite Ausnehmung sind derart zueinander angeordnet, dass zumindest ein Stift der Koppeleinrichtung in der ersten Ausnehmung und der zweiten Ausnehmung beweglich anordenbar ist. Insbesondere weist der zweite Stössel genau eine zweite Ausnehmung auf, die in Umfangsrichtung des zweiten Stössels umlaufend ausgebildet ist.

Dies hat den Vorteil, dass mittels der Bewegung des Stifts der Koppeleinrichtung einfach und zuverlässig eine Kopplung und/oder Entkopplung der Stössel ermöglicht wird, die insbesondere reversibel ist.

Bevorzugt sind zumindest zwei, bevorzugt zumindest drei und besonders bevorzugt zumindest vier erste Ausnehmungen und gegebenenfalls entsprechende zweite Ausnehmungen vorgesehen. Insbesondere sind die ersten Ausnehmungen und gegebenenfalls zweiten Ausnehmungen in Umfangsrichtung des ersten Stössels im Wesentlichen äquidistant zueinander beabstandet sind.

Dies hat den Vorteil, dass durch die Anordnung mehrerer Ausnehmungen und Stifte, die in Umfangsrichtung des ersten Stössels im Wesentlichen äquidistant zueinander beabstandet sind, eine verbesserte Kopplung der Stössel im Hinblick auf gegebenenfalls hohe Belastungen ermöglicht wird, wodurch zudem gegebenenfalls eine Entkopplung ebenfalls zuverlässiger wird, da ein Verkanten der Stifte weitgehend vermeidbar ist.

Bevorzugt ist der zumindest eine Stift auf der der zweiten Ausnehmung zugewandten Seite und/oder der der zweiten Ausnehmung abgewandten Seite zulaufend ausgebildet ist. Insbesondere ist der zulaufende Bereich des Stifts als Kegelstumpf ausbildet.

Bevorzugt ist der zumindest eine Stift beweglich angeordnet und zwischen einer Koppelposition und einer Entkoppelposition bewegbar. Insbesondere ist der zumindest eine Stift in einer Richtung im Wesentlichen senkrecht zur axialen Austragsrichtung bewegbar.

Die Ausgestaltung des Stifts mit zulaufenden Enden ist insbesondere vorteilhaft bei einer Bewegung des Stifts zwischen der Koppelposition und der Entkoppelposition im Wesentlichen senkrecht zur axialen Austragsrichtung; durch die Bewegung des Austragsstössels wird in diesem Fall bei entsprechender Anordnung des Stifts eine Kraft auf den zulaufenden Abschnitt des Stifts ausgeübt, wodurch der Stift vom zweiten Stössel wegbewegt wird und somit die Entkopplung der Stössel zuverlässig erreicht werden kann. Dies hat den weiteren Vorteil, dass kein zusätzlicher Antrieb für die Kopplung und/oder Entkopplung notwendig ist.

Bevorzugt weist der zweite Stössel, insbesondere auf der der Stirnseite zugewandten Seite, eine Mitnahmeeinrichtung auf zum Mitnehmen des ersten Stössels nach dem Entkoppeln bei einer Bewegung entgegengesetzt zur Austragsrichtung. Insbesondere ist die Mitnahmeeinrichtung als zumindest ein seitlicher Vorsprung und bevorzugt als Mitnahmeflansch ausgebildet.

Dies hat den Vorteil, dass die entkoppelten Stössel für den Bediener einfach zurückziehbar und gegebenenfalls koppelbar sind, um beispielsweise eine weitere Kartusche in der Austragseinrichtung zu verwenden.

Bevorzugt weist der Austragsstössel auf der der Stirnseite abgewandten Seite eine Abstützeinrichtung auf. Insbesondere ist die Abstützeinrichtung als seitlicher Vorsprung und bevorzugt als Flansch ausgebildet. Die Abstützeinrichtung ist geeignet zum Abstützen des Austragsstössels auf einer Stützkartusche der Austragseinrichtung in einer Querschnittsänderungsposition, insbesondere einer Entkoppelposition.

Dies hat den Vorteil, dass gegebenenfalls der erste Stössel zuverlässig in der Entkoppelposition gehalten werden kann und die Entkoppelung zuverlässig erreichbar ist. Zudem kann dadurch gewährleistet werden, dass eine auf die Entkoppeleinrichtung ausgeübte Kraft nicht zu gross wird und diese beschädigt.

Ein weiterer Aspekt der vorliegenden Erfindung betrifft eine Austragseinrichtung umfassend eine Stützkartusche zur Aufnahme der insbesondere kollabierbaren Kartusche. Die Austragseinrichtung umfasst weiter einen Austragsstössel wie vorstehend beschrieben.

Bevorzugt weist die Stützkartusche zumindest eine Vertiefung auf zum Eingreifen für den zumindest einen Stift in der Entkoppelposition. Insbesondere ist die Vertiefung vom Austragsstössel weg zumindest in einem Abschnitt zulaufend ausgebildet ist und weist bevorzugt eine Fase auf. Insbesondere ist der zulaufende Abschnitt der Vertiefung zumindest in einem Bereich im Wesentlichen komplementär zum zulaufenden Ende des Stifts ausgebildet. Insbesondere weist die Stützkartusche genau eine Vertiefung auf, die in Umfangsrichtung der Stützkartusche umlaufend ausgebildet ist.

Die Ausgestaltung der Vertiefung mit einer Fase ist insbesondere vorteilhaft bei einer Bewegung des Stifts zwischen der Koppelposition und der Entkoppelposition im Wesentlichen senkrecht zur axialen Austragsrichtung; durch die Bewegung des Austragsstössels entgegengesetzt zur Austragsrichtung wird in diesem Fall bei entsprechender Anordnung des Stifts eine Kraft auf den zulaufenden Abschnitt des Stifts ausgeübt, wodurch der Stift in Richtung des zweiten Stössels bewegt wird und so die Kopplung der Stössel zuverlässig erreicht werden kann. Dies hat den weiteren Vorteil, dass kein zusätzlicher Antrieb für die Kopplung notwendig ist.

Ein zusätzlicher Aspekt der vorliegenden Erfindung betrifft ein Verfahren zum Austragen eines austragbaren Mediums aus einer kollabierbaren Kartusche mittels einer Austragseinrichtung. Die Austragseinrichtung ist insbesondere wie vorstehend beschrieben ausgebildet.

Das erfindungsgemässe Verfahren umfasst den Schritt der Bereitstellung der Austragseinrichtung umfassend eine Stützkartusche zur Aufnahme der Kartusche. Die Austragseinrichtung umfasst weiter einen Austragsstössel, wobei eine Stirnseite des Austragsstössels auf die kollabierbare Kartusche einwirken kann zum Austragen des Mediums aus der kollabierbaren Kartusche. Die Stirnseite weist während des Austragens des Mediums zumindest einen ersten Austragsquerschnitt und anschliessend zumindest einen zweiten Austragsquerschnitt auf, wobei insbesondere der erste Austragsquerschnitt und der zweite Austragsquerschnitt eine unterschiedliche Grösse haben.

Anschliessend erfolgt der Schritt des Austragens des Mediums aus der kollabierbaren Kartusche mittels der Austragseinrichtung durch Bewegen des Austragsstössels entlang einer axialen Austragsrichtung, wobei an einer Querschnittsänderungsposition eine Querschnittsänderung vom ersten Austragsquerschnitt zum zweiten Austragsquerschnitt erfolgt.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Fig. 1: Schematische Darstellung einer erfindungsgemässen Austragseinrichtung;
- Fig. 2: Perspektivische Darstellung einer Kartusche zur Verwendung in der Austragseinrichtung gemäss Figur 1;
- Fig. 3: Perspektivische Darstellung der Austragseinrichtung gemäss Figur 1 in einer ersten Stellung;
- Fig. 4: Perspektivische Darstellung der Austragseinrichtung gemäss Figur 1 in einer zweiten Stellung;
- Fig. 5: Perspektivische Darstellung eines Ausschnitts der Austragseinrichtung gemäss Figur 3;
- Fig. 6: Perspektivische Darstellung eines Ausschnitts der Austragseinrichtung gemäss Figur 4;
- Fig. 7: Perspektivische Darstellung eines Teils der Austragseinrichtung gemäss Figur 3 mit sichtbarer Koppeleinrichtung
- Fig. 8: Perspektivische Darstellung einer alternativen erfindungsgemässen Austragseinrichtung in einer Anfangsstellung;
- Fig. 9: Perspektivische Darstellung der Austragseinrichtung gemäss Figur 8 in einer Entkoppelposition;
- Fig. 10: Perspektivische Darstellung der Austragseinrichtung gemäss Figur 8 in einer Endstellung;
- Fig. 11: Perspektivische Darstellung von zwei Kartuschen für eine Austragseinrichtung;
- Fig. 12: Perspektivische Darstellung einer Austragseinrichtung für die zwei Kartuschen gemäss Figur 11.

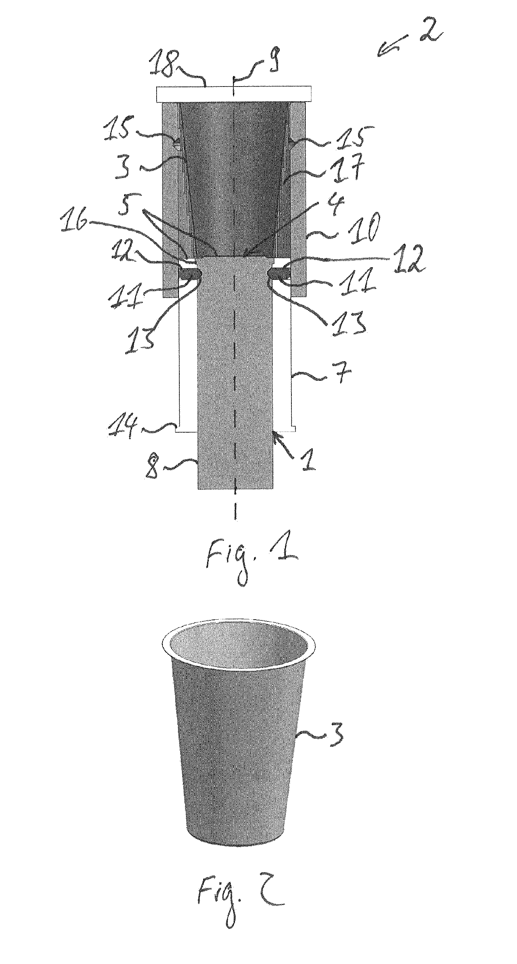

Figur 1 zeigt in schematischer Darstellung eine erfindungsgemässe Austragseinrichtung 2.

Die Austragseinrichtung 2 gemäss Figur 1 befindet sich in einer Anfangsstellung vor dem Austragen eines Mediums aus einer kollabierbaren Kartusche 3, die in der Austragseinrichtung 2 angeordnet ist. Die Austragseinrichtung 2 umfasst eine Stützkartusche 10 zur Aufnahme der Kartusche 3. Zudem ist in der Stützkartusche 10 eine Hülse 17 angeordnet, die die Kartusche umgibt, um die Kartusche 3 seitlich abzustützen, so dass die Kartusche 3 durch den zum Austragen auf die Kartusche 3 ausgeübten Druck nicht aufplatzt; die Hülse 17 ist in axialer Austragsrichtung 9 zusammenschiebbar ausgebildet, so dass die kollabierbare Kartusche 3 zusammengedrückt werden kann zum Austragen des Mediums

Ein Austragsstössel 1 ist teilweise in der Stützkartusche 10 angeordnet, wobei der Austragsstössel 1 mittels einer Stirnseite 4 auf die Kartusche 3 einwirken kann durch Bewegen des Austragsstössels 1 entlang der axialen Austragsrichtung 9.

Der Austragsstössel 1 ist zweiteilig ausgebildet und umfasst einen ersten Stössel 7 und einen zweiten Stössel 8. Der zweite Stössel 8 ist im ersten Stössel 7 angeordnet, wobei der erste Stössel 7 und der zweite Stössel 8 im Wesentlichen zentriert zueinander angeordnet sind bezogen auf die Längsachsen der beiden Stössel; die Längsachsen der beiden Stössel sind im Wesentlichen parallel zur axialen Austragsrichtung 9 angeordnet.

Der erste Stössel 7 weist auf der der Stirnseite 4 abgewandten Seite einen als Abstützeinrichtung ausgebildeten Flansch 14 auf zum Abstützen des Austragsstössels 1 auf der Stützkartusche 10 in einer Entkoppelposition des ersten Stössels 7. Zudem weist der erste Stössel 7 erste Ausnehmungen auf, die als erste Öffnungen 12 ausgebildet sind.

Der zweite Stössel 8 weist auf der der Stirnseite 4 zugewandten Seite einen als Mitnahmeeinrichtung ausgebildeten Mitnahmeflansch 16 auf zur Mitnahme des ersten Stössels bei einer Rückbewegung des Austragsstössels von einer Auslassseite 18 weg, so dass nach einer Entkopplung des ersten Stössels 7 vom zweiten Stössel 8 eine Kopplung der Stössel ermöglicht wird.

In den ersten Öffnungen 12 und den zweiten Ausnehmungen 13 sind Stifte 11 angeordnet zur Kopplung bzw. Entkopplung der Stössel. In der Stützkartusche 10 sind zudem Vertiefungen 15 angeordnet. Die Stifte 11 können in der Entkoppelposition in die Vertiefungen 15 bewegt werden. In diesem Fall greifen die Stifte nicht mehr in die zweiten Ausnehmungen 13 ein, so dass eine Entkopplung der Stössel erfolgen kann.

Die Stirnfläche 4 weist einen ersten Austragsquerschnitt 5 auf, der durch die Stirnflächen des ersten Stössels 7 und des zweiten Stössels 8 gebildet wird. Die Stirnfläche 4 wirkt dabei bei einer Bewegung des Austragsstössels 1 zur Auslassseite 18 hin auf die kollabierbare Kartusche 3 ein, so dass das Medium aus der Austragseinrichtung 2 durch einen in der Auslassseite 18 angeordneten Auslass gefördert werden kann. An der Auslassseite 18 kann entsprechend den Anforderungen eine statische oder dynamische Mischeinrichtung angeordnet werden, wenn beispielsweise die Kartusche 3 als Medium zumindest zwei unterschiedliche, zu mischende Komponenten enthält; alternativ oder zusätzlich kann auch ein Förderrohr angeordnet werden zum Fördern des Medium an einen Applizierort.

In Figur 2 ist eine kollabierbare Kartusche 3 in perspektivischer Darstellung gezeigt, wie diese in der Austragseinrichtung gemäss Figur 1 einsetzbar ist.

Gleiche Referenzzeichen bedeuten gleiche Merkmale in allen Figuren.

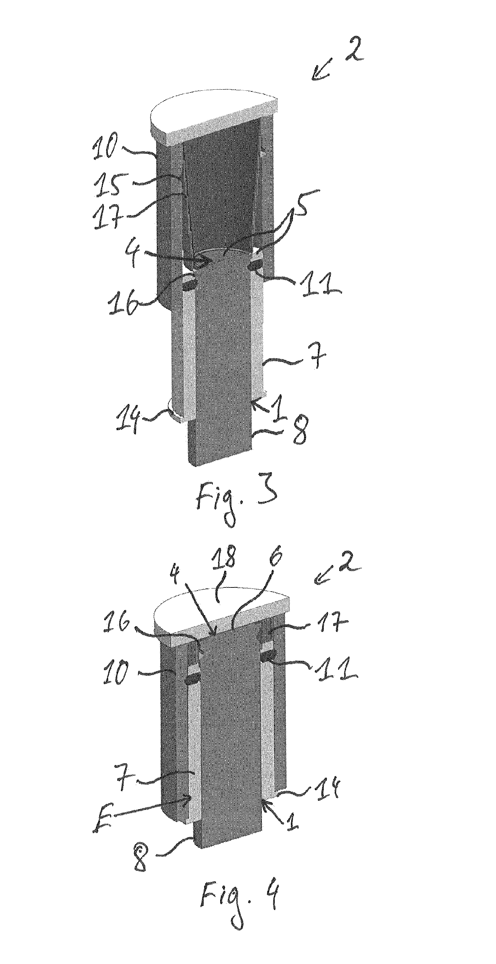

In den Figuren 3 und 4 ist die Austragseinrichtung 2 gemäss Figur 1 in perspektivischer Darstellung in zwei Stellungen gezeigt. Figur 3 zeigt die Austragseinrichtung 2 in einer ersten Stellung mit der Stirnfläche 4, die den ersten Austragsquerschnitt 5 aufweist. Der erste Stössel 7 und der zweite Stössel 8 sind mittels der Stifte 11 gekoppelt.

In Figur 4 wurde der Austragsstössel 1 zur Auslassseite 18 hinbewegt. Hierbei wurde der erste Stössel 7 mit dem zweiten Stössel 8 so bewegt, bis der erste Stössel die Entkoppelposition E erreicht hat, so dass der Flansch 14 auf der Stützkartusche 10 aufliegt und somit der erste Stössel 7 auf der Stützkartusche 10 abgestützt wird. In der Entkoppelposition E werden die Stifte 11 aufgrund der als Kegelstumpf ausgebildeten Enden, die in die zweiten Vertiefungen 13 des zweiten Stössels 8 eingreifen, durch die in der axialen Austragsrichtung 9 zur Auslassseite 18 hin ausgeübte Kraft in die Vertiefungen 15 bewegt; hierdurch erfolgt eine Entkopplung der beiden Stössel. Anschliessend kann der zweite Stössel 8 weiter zur Auslassseite 18 hin bewegt werden; der Austragsstössel 1 weist nach der Entkopplung eine Stirnfläche 4 mit dem zweiten Austragsquerschnitt 6 auf.

Der Austragsstössel 1 ist somit als zweistufiger Austragsstössel 1 bezogen auf die Stirnfläche 4 ausgebildet.

Während der Bewegung des Austragsstössel 1 zur Auslassseite 18 erfolgt ein Zusammenschieben der Hülse 17, so dass die kollabierbare Kartusche 3 entsprechend seitlich gestützt wird und gleichzeitig ein Austragen des Mediums ermöglicht wird.

Selbstverständlich ist es auch möglich, die kollabierbare Kartusche 3 ohne die Hülse 17 in der Austragseinrichtung 2 zu verwenden.

Der zweite Stössel 8 weist den Mitnahmeflansch 16 auf. Bei der Rückbewegung des zweiten Stössels von der Stellung wie in Figur 4 gezeigt zur Stellung gemäss Figur 3 erfolgt eine Mitnahme des ersten Stössels 7 durch den zweiten Stössel 8; hierdurch wird durch den ersten Stössel 7 eine Kraft auf den Stift 11 derart ausgeübt, dass der Stift aus der Vertiefung 15 bewegt wird und die Stössel wieder gekoppelt werden.

Bei dieser Bewegung zurück zur Stellung gemäss Figur 3 wird zudem die Hülse 17 wieder auseinander gezogen.

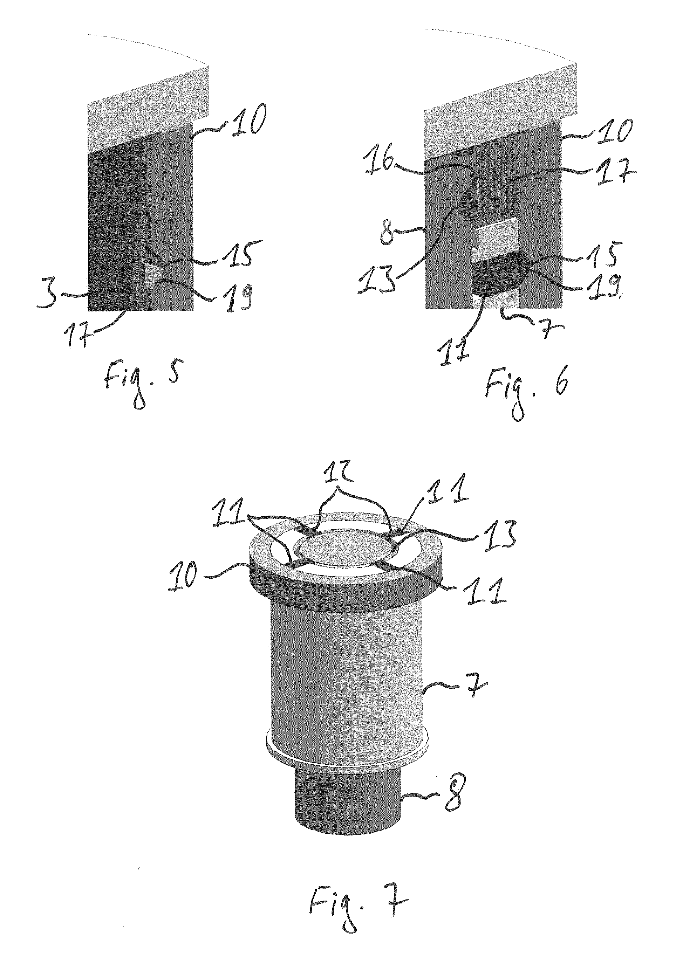

In den Figuren 5 und 6 sind Ausschnitte der Figuren 3 und 4 vergrössert dargestellt. In Figur 5 ist die Ausgestaltung der Vertiefung 15 mit einer Fase 19 gezeigt, um das Koppeln und Entkoppeln der Stössel besser zu ermöglichen wie oben beschrieben; die Stössel sind hier nicht sichtbar und befinden sich im gekoppelten Zustand.

In Figur 6 ist der entkoppelte Zustand der Stössel sichtbar. Der Stift 11 wurde aus der zweiten Ausnehmung 13 in die Vertiefung 15 mit der Fase 19 bewegt. Die zweite Ausnehmung 13 ist ebenfalls zulaufend von der Stützkartusche weg ausgebildet. Der Stift 11 weist an beiden Enden eine kegelstumpfartige Form auf.

In Figur 7 ist in perspektivischer Darstellung ein Teil der Austragseinrichtung gemäss Figur 3 mit sichtbarer Koppeleinrichtung gezeigt, wobei die Austragseinrichtung 2 gemäss Figur 3 senkrecht zur axialen Austragsrichtung 9 durch die Koppeleinrichtung geschnitten wurde und hier der der Auslassseite abgewandte Teil gezeigt ist. Die Koppeleinrichtung umfasst dabei die Stifte 11, die in ersten Öffnungen 12 angeordnet sind. Zudem ist genau eine zweite Ausnehmung 13 vorgesehen, die in Umfangsrichtung des zweiten Stössels 8 umlaufend ausgebildet ist.

Die erste Stössel 7 weist vier erste Öffnungen 12 auf, in denen die Stifte 11 angeordnet sind. Die ersten Öffnungen 12 sind in Umfangsrichtung des ersten Stössels 7 im Wesentlichen äquidistant zueinander beabstandet.

Der zweite Stössel weist genau eine umlaufende zweite Ausnehmung 13 auf, in die die Stifte 11 bewegt werden können. Die Anordnung genau einer umlaufenden zweiten Ausnehmung 13 hat den Vorteil, dass der erste Stössel 7 und der zweite Stössel 8 zueinander relativ rotierbar sind, ohne die Funktionalität der Kopplung und Entkopplung zu beinträchtigen.

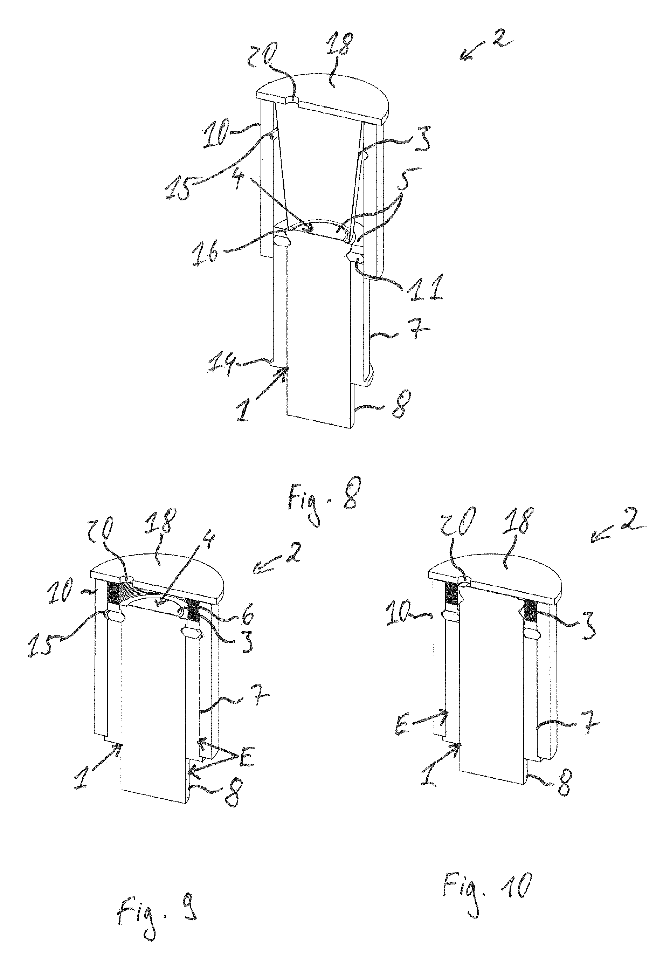

In Figur 8 ist in perspektivischer Darstellung eine alternative erfindungsgemässe Austragseinrichtung 2 in einer Anfangsstellung gezeigt. Die Austragseinrichtung 2 ist im Wesentlichen wie die Austragseinrichtung gemäss Figur 3 ausgestaltet.

Im Unterschied zu Figur 3 ist in der Austragseinrichtung 2 gemäss Figur 8 ein Auslass 20 in der Auslassseite 18 gezeigt. Zudem ist in der Stützkartusche 10 keine Hülse vorgesehen im Unterschied zur Figur 3.

In Figur 9 ist die Austragseinrichtung 2 gemäss Figur 8 in der Entkoppelposition dargestellt. Der erste Stössel 7 und der zweite Stössel 8 des Austragsstössels 1 befinden sich dabei in der Entkoppelposition E. Die Kartusche 3 wurde für das Austragen des Mediums kollabiert.

In Figur 10 ist die Austragseinrichtung 2 gemäss Figur 8 in einer Endstellung dargestellt. Der erste Kolben 7 verbleibt dabei in der Entkoppelposition E, wobei der zweite Kolben 8 weiter zur Auslassseite 18 bewegt wurde.

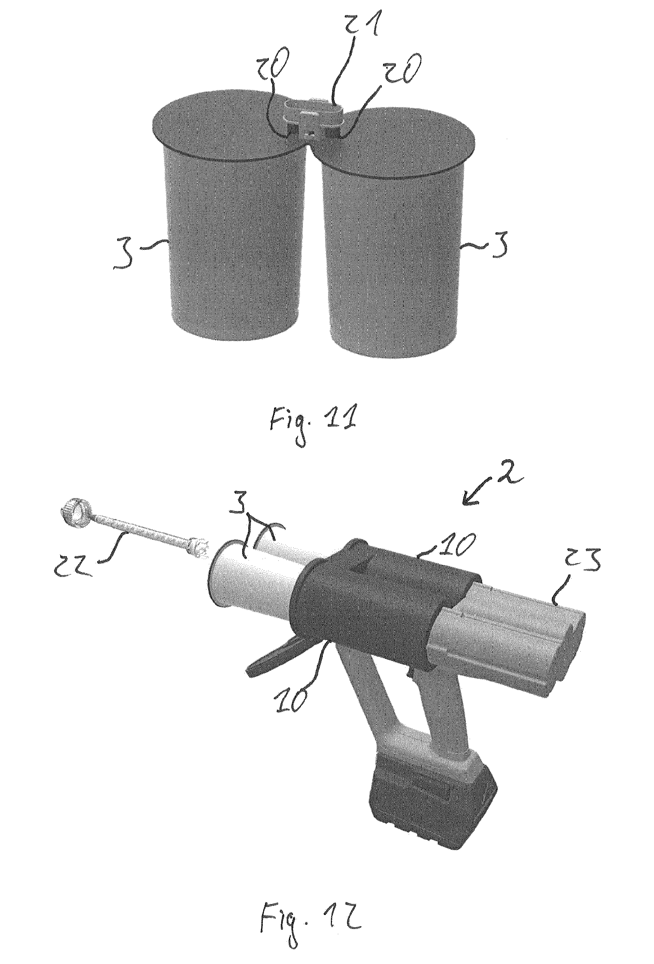

In Figur 11 sind in perspektivischer Darstellung zwei Kartuschen 3 zur Aufnahme in einer Austragseinrichtung gemäss Figur 12 dargestellt.

Die Kartuschen 3 weisen Auslässe 20 auf sowie eine Befestigungseinrichtung 21 beispielsweise für einen statischen Mischer; selbstverständlich können auch andere Appliziereinrichtungen wie bspw. Kanülen an der Befestigungseinrichtung 21 angeordnet werden.

Üblicherweise enthalten die beiden Kartuschen unterschiedliche KlebstoffKomponenten, die durch einen stromabwärts der Auslässe 20 an der Befestigungseinrichtung 21 angeordneten statischen Mischer vermischt werden können.

In Figur 12 ist in perspektivischer Darstellung eine erfindungsgemässe Austragseinrichtung 2 gezeigt.

Die Austragseinrichtung 2 weist eine zur Aufnahme der beiden Kartuschen 3 ausgestaltete Stützkartusche 10 auf. Zudem umfasst die Austragseinrichtung 2 einen statischen Mischer 22, der an der in Figur 11 dargestellten Befestigungseinrichtung 21 befestigbar ist.

Die Austragseinrichtung 2 umfasst weiter einen Antrieb 23 umfassend einen Elektromotor zum Betätigen der hier nicht sichtbaren Austragsstössel. Die Austragseinrichtung 2 umfasst zwei Austragsstössel zum im Wesentlichen gleichzeitigen Austragen der beiden Kartuschen 3.

Die Austragsstössel können dabei wie in Figur 8 gezeigt ausgebildet sein.

Alternativ können die Austragsstössel als nicht gekoppelte Austragsstössel ausgebildet sein, wobei der Antrieb 23 für jede Kartusche zwei Stösselantriebe aufweist (nicht gezeigt), die derart mit den Stösseln wirkverbunden sind, so dass die Stirnseite des Austragsstössels während des Austragens des Mediums zumindest einen ersten Austragsquerschnitt und anschliessend zumindest einen zweiten Austragsquerschnitt aufweist.

## Patentansprüche

1. Austragsstössel (1) für eine Austragseinrichtung (2) zur Aufnahme einer insbesondere kollabierbaren Kartusche (3) enthaltend ein austragbares Medium, wobei der Austragsstössel (1) an und/oder in der Austragseinrichtung (2) anordenbar ist, und wobei der Austragsstössel (1) eine Stirnseite (4) aufweist, die auf die Kartusche (3) einwirken kann zum Austragen des Mediums aus der Kartusche (3), **dadurch gekennzeichnet, dass** der Austragsstössel (1) derart ausgestaltet ist, dass die Stirnseite (4) während des Austragens des Mediums zumindest einen ersten Austragsquerschnitt (5) und anschliessend zumindest einen zweiten Austragsquerschnitt (6) aufweist, wobei insbesondere der erste Austragsquerschnitt (5) und der zweite Austragsquerschnitt (6) eine unterschiedliche Grösse und/oder Form aufweisen.

2. Austragsstössel (1) nach Anspruch 1, **dadurch gekennzeichnet, dass** bei bestimmungsgemässer Bewegung des Austragsstössels (1) entlang einer axialen Austragsrichtung (9) der erste Austragsquerschnitt (5) grösser als der zweite Austragsquerschnitt (6) ist.

3. Austragsstössel (1) nach Anspruch 1 oder 2, **dadurch gekennzeichnet, dass** der Austragsstössel (1) zumindest zweiteilig ausgebildet ist und einen ersten Stössel (7) und einen zweiten Stössel (8) umfasst.

4. Austragsstössel (1) nach Anspruch 3, **dadurch gekennzeichnet, dass** am und/oder im Austragsstössel (1) eine Koppeleinrichtung zum Koppeln und/oder Entkoppeln des ersten Stössels (7) und des zweiten Stössels (8) angeordnet ist, wobei insbesondere ein Koppeln und/oder Entkoppeln reversibel ist.

5. Austragsstössel (1) nach Anspruch 3 oder 4, **dadurch gekennzeichnet, dass** der zweite Stössel (8) im ersten Stössel (7) angeordnet ist, wobei insbesondere der erste Stössel (7) und der zweite Stössel (8) im Wesentlichen zentriert zueinander angeordnet sind.

6. Austragsstössel (1) nach einem der vorangehenden Ansprüche, **dadurch gekennzeichnet, dass** der erste Stössel (7) zumindest in einem Abschnitt hohlzylinderförmig ausgebildet ist zur Aufnahme des zweiten Stössels (8).

7. Austragsstössel (1) nach Anspruch 6, **dadurch gekennzeichnet, dass** der erste Stössel (7) zumindest eine erste Ausnehmung, insbesondere eine erste Öffnung (12), und der zweite Stössel (7) zumindest eine zweite Ausnehmung (13) aufweisen, die derart zueinander angeordnet sind, dass zumindest ein Stift (11) der Koppeleinrichtung in der ersten Ausnehmung und der zweiten Ausnehmung (13) beweglich anordenbar ist.

8. Austragsstössel (1) nach Anspruch 7, **dadurch gekennzeichnet, dass** zumindest zwei, bevorzugt zumindest drei und besonders bevorzugt zumindest vier erste Ausnehmungen und gegebenenfalls entsprechende zweite Ausnehmungen (13) vorgesehen sind, die insbesondere in Umfangsrichtung des ersten Stössels (7) im Wesentlichen äquidistant zueinander beabstandet sind.

9. Austragsstössel (1) nach Anspruch 7 oder 8, **dadurch gekennzeichnet, dass** der zumindest eine Stift (11) auf der der zweiten Ausnehmung (13) zugewandten Seite und/oder der der zweiten Ausnehmung (13) abgewandten Seite zulaufend ausgebildet ist und insbesondere als Kegelstumpf ausbildet ist.

10. Austragsstössel (1) nach einem der Ansprüche 7 bis 9, **dadurch gekennzeichnet, dass** der zumindest eine Stift (11) beweglich angeordnet ist und zwischen einer Koppelposition und einer Entkoppelposition bewegbar ist, insbesondere in einer Richtung im Wesentlichen senkrecht zur axialen Austragsrichtung (9).

11. Austragsstössel (1) nach einem der vorangehenden Ansprüche, **dadurch gekennzeichnet, dass** der zweite Stössel (8), insbesondere auf der der Stirnseite (4) zugewandten Seite, eine Mitnahmeeinrichtung, insbesondere zumindest einen seitlichen Vorsprung und bevorzugt einen Mitnahmeflansch (16), aufweist zum Mitnehmen des ersten Stössels (7) nach dem Entkoppeln bei einer Bewegung entgegengesetzt zur Austragsrichtung (9).

12. Austragsstössel (1) nach einem der vorangehenden Ansprüche, **dadurch gekennzeichnet, dass** der Austragsstössel (1) auf der der Stirnseite (4) abgewandten Seite eine Abstützeinrichtung, insbesondere einen seitlichen Vorsprung und bevorzugt einen Flansch (14), aufweist zum Abstützen des Austragsstössels (1) auf einer Stützkartusche (10) der Austragseinrichtung (2) in einer Querschnittsänderungsposition, insbesondere einer Entkoppelposition (E).

13. Austragseinrichtung (2) umfassend eine Stützkartusche (10) zur Aufnahme der Kartusche (3) und weiter umfassend einen Austragsstössel (1) nach einem der vorangehenden Ansprüche.

14. Austragseinrichtung (2) nach Anspruch 13, **dadurch gekennzeichnet, dass** die Stützkartusche (10) zumindest eine Vertiefung (15) aufweist zum Eingreifen für den zumindest einen Stift in der Entkoppelposition (E), wobei insbesondere die Vertiefung (15) vom Austragsstössel (1) weg zumindest in einem Abschnitt zulaufend ausgebildet ist und bevorzugt eine Fase (19) aufweist.

15. Verfahren zum Austragen eines austragbaren Mediums aus einer kollabierbaren Kartusche (3) mittels einer Austragseinrichtung (2), insbesondere gemäss Anspruch 13 oder 14, umfassend die folgenden Schritte:
- Bereitstellung der Austragseinrichtung (2) umfassend eine Stützkartusche (10) zur Aufnahme der Kartusche (3) sowie einen Austragsstössel (1), wobei eine Stirnseite (4) des Austragsstössels (1) auf die kollabierbare Kartusche (3) einwirken kann zum Austragen des Mediums aus der kollabierbaren Kartusche (3), wobei die Stirnseite (4) des Austragsstössels (1) während des Austragens des Mediums zumindest einen ersten Austragsquerschnitt (5) und anschliessend zumindest einen zweiten Austragsquerschnitt (6) aufweist, wobei insbesondere der erste Austragsquerschnitt (5) und der zweite Austragsquerschnitt (6) eine unterschiedliche Grösse haben;
- Austragen des Mediums aus der kollabierbaren Kartusche (3) mittels der Austragseinrichtung (2) durch Bewegen des Austragsstössels (1) entlang einer axialen Austragsrichtung (9), wobei an einer Querschnittsänderungsposition eine Querschnittsänderung vom ersten Austragsquerschnitt (5) zum zweiten Austragsquerschnitt (6) erfolgt.
